# EUROPÄISCHE PATENTSCHRIFT

(11) **EP 2 452 853 B1**
(45) Veröffentlichungstag und Bekanntmachung des Hinweises auf die Patenterteilung: **20.02.2019**
(21) Anmeldenummer: 11008818.4
(22) Anmeldetag: 07.11.2011
(51) Int. Cl.: B60P 3/39

(54) **Wohnmobilbett**
Mobile home bed
Lit pour camping-car

(30) Priorität: 12.11.2010 DE 202010015315 U
(43) Veröffentlichungstag der Anmeldung: 16.05.2012
(73) Patentinhaber: Mobil Invest GmbH, 99867 Gotha (DE)
(72) Erfinder: Siegert, Thomas, 33378 Rheda-Wiedenbrück (DE)
(74) Vertreter: Rolf, Gudrun

(56) Entgegenhaltungen:
- DE-A1- 2 932 251
- DE-A1-102009 012 811
- GB-A- 2 428 220
- US-A- 3 727 970

## Beschreibung

Die Erfindung betrifft ein Wohnmobilbett aus mehreren Teilliegeflächen, die quer zur Längsrichtung eines Fahrzeuges verlaufen, von denen mindestens eine Teilliegefläche über Funktionsbeschläge in eine vertikale Lage verschwenkbar ist, wobei die Funktionsbeschläge auf in Längsrichtung eines Fahrzeuges horizontal verlaufenden Längsführungen parallel verschieblich gelagert sind.

Es ist ein Faltbett, insbesondere für Wohnmobile bekannt, EP 1 829 742 A2, welches eine quer zur Längsrichtung des Fahrzeugs verlaufende Liegefläche aufweist, die jedoch entlang einer in Längsrichtung des Fahrzeuges verlaufenden Achse hochschwenkbar ist, so dass zumindest ein geringer Raumgewinn im Bereich des Wohnraumes möglich ist.

Ein anderes bekanntes Wohnmobilbett, DE 102009 012 811 A1, ist in eine hintere und eine vordere Teilliegefläche geteilt und die hintere Teilliegefläche über Funktionsbeschläge in eine vertikale Lage verschwenkbar ausgeführt, wobei die vordere Teilliegefläche weiterhin so belastbar abgestützt bleibt, dass sie weiterhin als Liegefläche oder Ablagefläche für Koffer oder sonstige schwere Gegenstände genutzt werden kann. Das unter der hinteren Teilliegefläche freigegebene Raumvolumen kann als Stauraum genutzt werden. Dieses Wohnmobilbett wird in der Regel jedoch in dieser Position mit hinten aufgerichteter Teilliegefläche entlang der Längsführung nach hinten verschoben, so dass nicht hinter dem Wohnmobilbett, sondern davor der nutzbare Wohnraum innerhalb eines Wohnmobils vergrößert und das Wohnmobilbett als Sitzbank verwendet werden kann.

Aufgabe der Erfindung ist es, ein Wohnmobilbett zur Verfügung zu stellen, welches die Variabilität des nutzbaren Innenraumes eines Wohnmobiles weiter wesentlich verbessert.

Die Lösung dieser Aufgabe erfolgt in Verbindung mit den Oberbegriffsmerkmalen erfindungsgemäß aus den technischen Merkmalen des kennzeichnenden Teils des Hauptanspruches insbesondere dadurch, dass das Wohnmobilbett mindestens in eine hintere Teilliegefläche und eine vordere Teilliegefläche geteilt ist und die vordere Teilliegefläche über die Funktionsbeschläge in eine vertikale Lage verschwenkbar ausgeführt ist und die hintere Teilliegefläche von Funktionsbeschlägen weiterhin belastbar abgestützt und als Liegefläche nutzbar ist. Hierdurch wird es möglich, ein Wohnmobilbett in einem Funktionszustand mit einer in eine vertikale Lage verschwenkten Teilliegefläche in Längsrichtung des Fahrzeuges verschieben zu können, so dass die Variabilität gegenüber dem bekannten Faltbett bereits deutlich vergrößert ist.

Weitere vorteilhafte Ausgestaltungen des Gegenstandes der Erfindung ergeben sich aus und in Kombination mit den nachfolgenden Unteransprüchen.

Bei dieser vorteilhaften Erfindung mit mindestens einer hinteren und einer vorderen Teilliegefläche ist die vordere Teilliegefläche über die Funktionsbeschläge in eine vertikale Lage verschwenkbar ausgeführt, wobei auch hier die verbliebene, jetzt hintere Teil-liegefläche weiterhin von den Funktionsbeschlägen so abgestützt wird, dass sie als schmale Liegefläche nutzbar bleibt. Diese vorteilhafte Ausführungsform ermöglicht den Wohnraumgewinn vor einem Wohnmobilbett ohne dieses verschieben zu müssen, wobei jedoch bei einer bevorzugten Ausführungsform wiederum das gesamte Wohnmobilbett in dieser Position entlang der Längsführungen nach vorne verschoben werden kann, falls der von der Heckklappe aus zugängliche Stauraum vergrößert werden soll.

Entsprechend einer besonders vorteilhaften Ausführungsform des Gegenstandes der Erfindung mit mindestens einer hinteren und einer vorderen Teilliegefläche können die Funktionsbeschläge so ausgeführt sein, dass die hintere und die vordere Teilliegefläche wahlweise oder gleichzeitig in eine vertikale Lage verschwenkt werden können und das Wohnmobilbett in dieser Position ebenfalls wahlfrei nach vorne oder hinten verschoben und dort verrastet werden kann. Eine solche Ausführungsform bietet natürlich den größtmöglichen Gewinn an Flexibilität der Gestaltung eines Wohnmobilinnenraumes, sei es des Wohnraumes und/ oder des Stauraumes.

Die Funktionsbeschläge bestehen dabei für jede Seite einer Teilliegefläche aus zwei Zweigelenkhebeln, die jeweils mit einem Gelenk an einem längsführungsfesten Beschlagbauteil und einem teilliegeflächefesten Beschlagbauteil angeordnet sind, wobei diese eine Kinematik erzeugen, die bei einer Verschwenkung ein gegenseitiges Verformen von auf den Teilliegeflächen eng benachbart angeordneten Matratzen ausschließen.

Des Weiteren ist es von Vorteil, dass an den Funktionsbeschlägen Kraftspeicher in Form von mechanischen Federn oder Gasdruckdämpfern angelenkt sind, mittels derer die Gewichtskräfte der beteiligten Bauteile zumindest teilweise kompensiert werden können, so dass sich der Umbau eines Wohnmobilinnenraumes auch von schwächeren Personen durchführen lässt.

Nachfolgend sind zwei Ausführungsbeispiele anhand von Zeichnungen näher beschrieben. Es zeigen:
- Fig. 1: eine räumliche Ansicht eines Wohnmobilheckbettes,
- Fig. 2: eine Ansicht des Wohnmobilbettes gemäß Fig. 1 mit hinterer aufgestellter Teilliegefläche,
- Fig. 3: eine Ansicht gemäß Fig. 2 mit nach hinten verschobenen Teilliegeflächen,
- Fig. 4: eine Ansicht des Wohnmobilbettes gemäß Fig. 1 von oben,
- Fig. 5: eine Ansicht des Wohnmobilbettes gemäß Fig. 2 von oben,
- Fig. 6: eine Ansicht des Wohnmobilbettes gemäß Fig. 3 von oben,
- Fig. 7: eine seitliche Teilansicht eines Funktionsbeschlages in horizontaler Position der Teilliegeflächen,
- Fig. 8: eine seitliche Ansicht eines Funktionsbeschlages mit zwei entgegengesetzt angehobenen Teilliegeflächen, und
- Fig. 9: eine Seitenansicht des Funktionsbeschlages gemäß Fig. 8 in vertikal verschwenkter Lage beider Teilliegeflächen.

Das Wohnmobilbett 1 besteht aus hinteren Teilliegefläche 2 und einer vorderen Teilliegefläche 3, die im Heckbereich eines Fahrzeuges angeordnet sind. Beide Teilliegeflächen 2;3 sind über Funktionsbeschläge 4 miteinander verbunden, die entlang einer Längsführung 5 in Fahrtrichtung eines Fahrzeuges verschieblich sind.

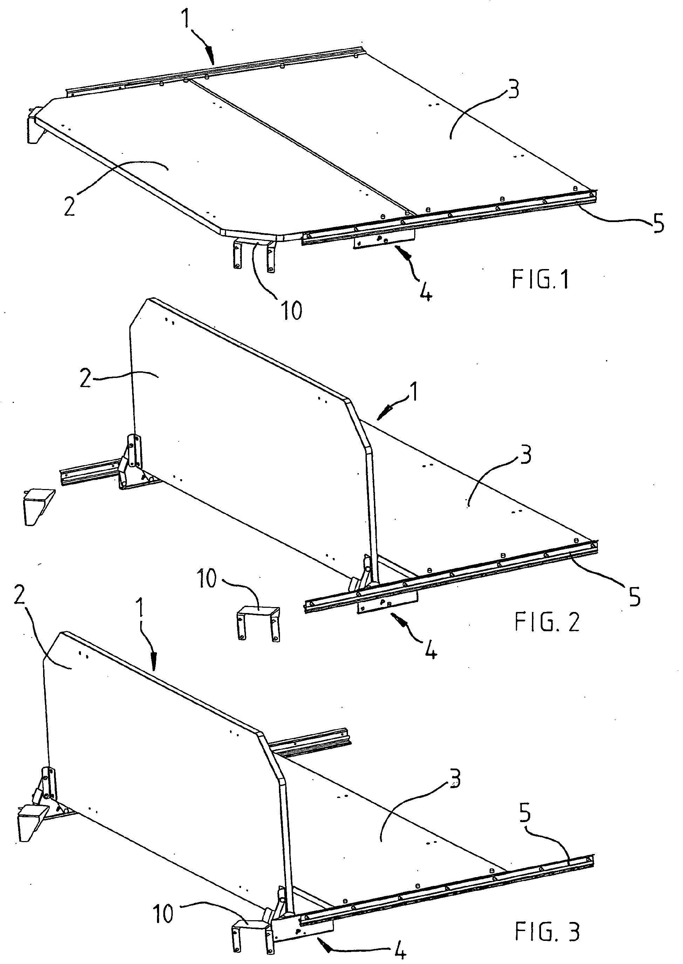

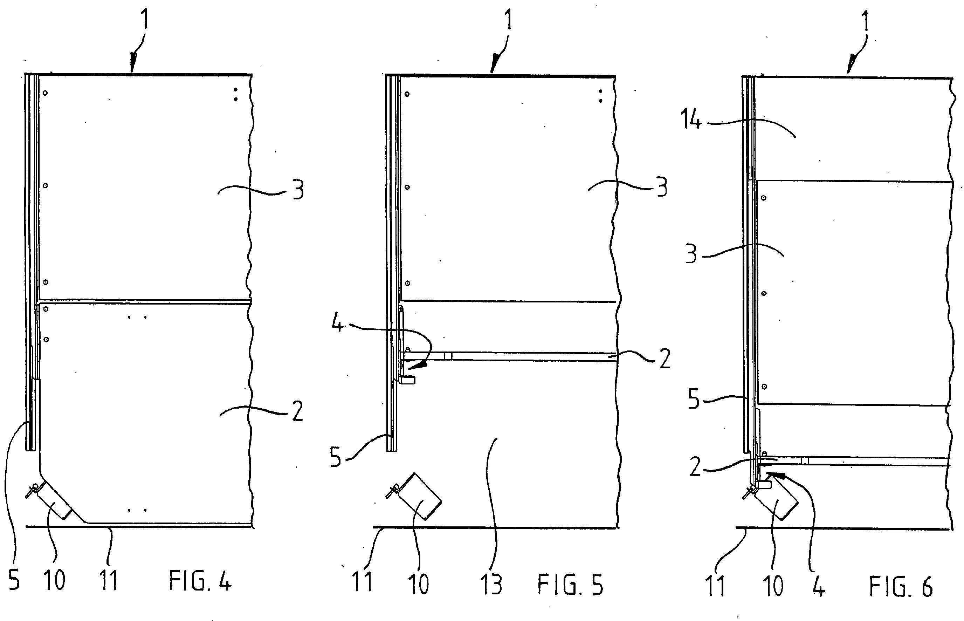

Wie in den Figuren 2 und 5 dargestellt ist, lässt sich die hintere Teilliegefläche 2 vertikal nach oben verschwenken und wie in den Figuren 3 und 6 gezeigt, das gesamte Wohnmobilbett 1 anschließend entgegen der Fahrtrichtung nach hinten bewegen, wobei die vordere, noch horizontale Teilliegefläche 3 weiterhin als Bett benutzt werden kann, falls sich die Teilliegeflächen 2;3 über die gesamte Breite eines Fahrzeuges erstrecken und damit die erforderliche Länge aufweisen.

Wie aus der Figur 4 ersichtlich ist, erstreckt sich das Wohnmobilbett 1 in Gebrauchsstellung bis zur Heckklappeninnenverkleidung 11, wobei es im vertikal aufgeklappten Zustand der hinteren Teilliegefläche 2, wie dies in Fig. 5 dargestellt ist zwischen der Heckklappeninnenverkleidung 11 und der aufgestellten hinteren Teilliegefläche 2 ein großer zusätzlicher Stauraum 13 vom Boden bis zum Dach eines Wohnmobiles erzeugt ist. Durch Verschieben des gesamten Wohnmobilbettes 1 nach hinten in Richtung der Heckklappeninnenverkleidung 11 lässt sich vor dem Wohnmobilbett 11 der im Wohnmobil vorhandene Wohnraum 14 deutlich vergrößern.

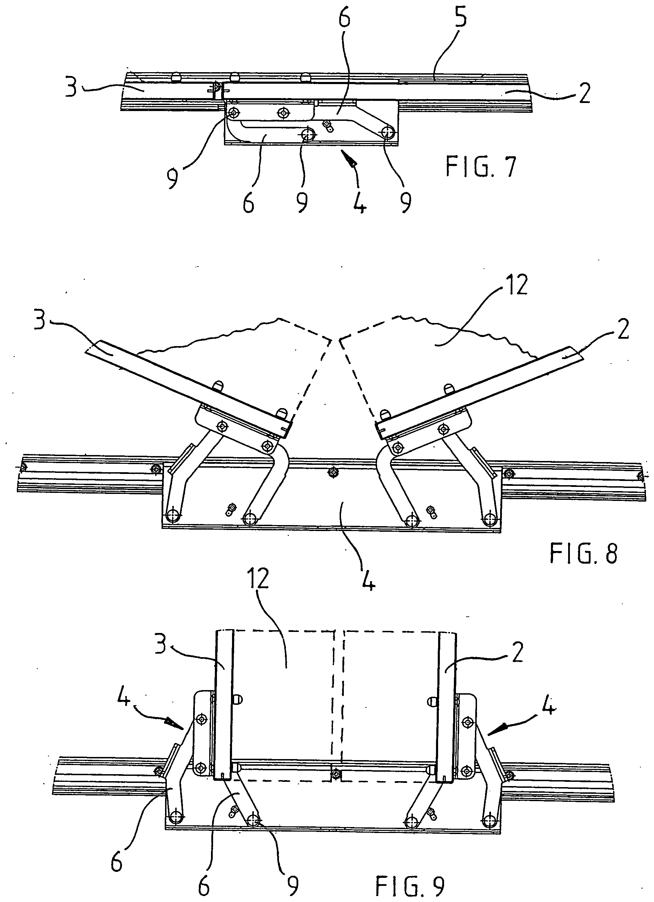

Wie in den Fig. 8 und 9 dargestellt, lassen sich die Funktionsbeschläge 4 auch derart ausführen, dass beide Teilliegeflächen 2;3 vertikal zueinander hochgeklappt werden können, woraufhin eine Längsverschiebung entlang der Längsführungen 5 wahlfrei nach hinten oder vorne erfolgen kann.

Ein Funktionsbeschlag 5 für eine Seite einer Teilliegefläche 2;3 besteht aus zwei Zweigelenkhebeln 6, die jeweils mit einem Gelenk 9 an einem längsführungsfesten Beschlagbauteil 7 und einem teilliegeflächenfesten Beschlagbauteil 8 angeordnet sind und bei einem Verschwenkvorgang eine Kinematik erzeugen, die ein gegenseitiges Verformen von auf den Teilliegeflächen 2;3 eng benachbart angeordneten Matratzen 12 ausschließt. Am Funktionsbeschlag 4 kann zusätzlich ein zeichnerisch nicht dargestellter Kraftspeicher angelenkt sein, der die Gewichtskräfte der beteiligten Bauteile zumindest teilweise kompensiert.

Dem Funktionsbeschlag 4 zugehörig sind noch weitere, im Heckbereich des Fahrzeuges angeordnete Träger 10, auf denen die hintere Teilliegefläche 2 im horizontal abgesenkten Zustand aufliegt.

## Patentansprüche

1. Wohnmobilbett aus mehreren Teilliegeflächen (2;3), die quer zur Längsrichtung eines Fahrzeuges verlaufen, von denen mindestens eine Teilliegefläche (2;3) über Funktionsbeschläge (4) in eine vertikale Lage verschwenkbar ist, wobei die Funktionsbeschläge (4) auf in Längsrichtung des Fahrzeuges horizontal verlaufenden Längsführungen (5) parallel verschieblich gelagert sind, **dadurch gekennzeichnet, dass** es mindestens in eine hintere Teilliegefläche (2) und eine vordere Teilliegefläche (3) geteilt ist und die vordere Teilliegefläche (3) über die Funktionsbeschläge (4) in eine vertikale Lage verschwenkbar ausgeführt ist und die hintere Teilliegefläche (2) von Funktionsbeschlägen (4) weiterhin belastbar abgestützt und als Liegefläche nutzbar ist.

2. Wohnmobilbett nach Anspruch 1, **dadurch gekennzeichnet, dass** es in dieser Position und unter Aufrechterhaltung des Nutzens entlang der Längsführungen (5) nach vorne verschiebbar und dort verrastbar ausgebildet ist.

3. Wohnmobilbett nach Anspruch 2, **dadurch gekennzeichnet, dass** das hinten zuvor versperrte Raumvolumen als zusätzlicher Stauraum (13) erzeugt ist.

4. Wohnmobilbett nach Anspruch 1, **dadurch gekennzeichnet, dass** die hintere und die vordere Teilliegefläche (2;3) über die Funktionsbeschläge (4) in vertikale Lagen verschwenkbar ausgeführt sind und dass die Teilliegeflächen (2;3) in dieser Position entlang der Längsführungen (5) nach hinten oder vorne verschiebbar und dort verrastbar ausgebildet sind.

5. Wohnmobilbett nach einem der vorgenannten Ansprüche, **dadurch gekennzeichnet, dass** ein Funktionsbeschlag (5) für eine Seite einer Teilliegefläche (2;3) aus zwei Zweigelenkhebeln (6) besteht, die jeweils mit einem Gelenk (9) an einem längsführungsfesten Beschlagbauteil (7) und einem teilliegeflächenfesten Beschlagbauteil (8) angeordnet sind und bei einer Verschwenkung eine Kinematik aufweisen, die ein gegenseitiges Verformen von auf den Teilliegeflächen (2;3) eng benachbart angeordneten Matratzen (12) ausschließt.

6. Wohnmobilbett nach einem der vorgenannten Ansprüche, **dadurch gekennzeichnet, dass** am Funktionsbeschlag (4) ein Kraftspeicher angelenkt ist, der die Gewichtskräfte der beteiligten Bauteile zumindest teilweise kompensiert.

## Claims

1. Motorhome bed composed of a plurality of lying surface sections (2;3) which extend transversely to the longitudinal direction of a vehicle, of which at least one lying surface section (2;3) can be pivoted into a vertical position by means of functional fittings (4), wherein the functional fittings (4) are mounted so as to be displaceable parallel to one another on longitudinal guides (5) extending horizontally in the longitudinal direction of the vehicle, **characterized in that** it is divided at least into a rear lying surface section (2) and a front lying surface section (3), and the front lying surface section (3) is designed such that it can be pivoted into a vertical position by means of the functional fittings (4), and the rear lying surface section (2) is supported by functional fittings (4) such that it can continue to be loaded and can be used as a lying surface.

2. Motorhome bed according to Claim 1, **characterized in that** it is designed such that, in this position, and while maintaining its use, it can be displaced forwardly along the longitudinal guides (5) and can be latched in this forward position.

3. Motorhome bed according to Claim 2, **characterized in that** the three-dimensional volume previously barred to the rear is opened up as an additional storage space (13).

4. Motorhome bed according to Claim 1, **characterized in that** the rear and the front lying surface sections (2;3) are designed such that they can be pivoted into vertical positions by means of the functional fittings (4), and **in that** the lying surface sections (2;3) are designed such that, in this position, they can be displaced rearwardly or forwardly along the longitudinal guides (5) and can be latched in this rearward or forward position.

5. Motorhome bed according to one of the preceding claims, **characterized in that** a functional fitting (5) for one side of a lying surface section (2;3) comprises two double-jointed levers (6) which are each arranged with a joint (9) on a fitting component (7) fixed to the longitudinal guide and on a fitting component (8) fixed to the lying surface section and which, during a pivoting movement, have a kinematic motion which prevents mutual deformation of mattresses (12) arranged closely adjacent to one another on the lying surface sections (2;3).

6. Motorhome bed according to one of the preceding claims, **characterized in that** on the functional fitting (4) there is articulated an energy accumulator which at least partially compensates for the weight forces of the components involved.

## Revendications

1. Lit pour camping-car composé de plusieurs couches partielles (2; 3), qui s'étendent transversalement à la direction longitudinale d'un véhicule, parmi lesquelles au moins une couche partielle (2; 3) peut pivoter dans une position verticale au moyen de ferrures fonctionnelles (4), dans lequel les ferrures fonctionnelles (4) sont montées de façon déplaçable parallèlement sur des guides longitudinaux (5) s'étendant horizontalement dans la direction longitudinale du véhicule, **caractérisé en ce qu'**il est divisé au moins en une couche partielle arrière (2) et une couche partielle avant (3) et la couche partielle avant (3) peut pivoter dans une position verticale au moyen des ferrures fonctionnelles (4) et la couche partielle arrière (2) est supportée par des ferrures fonctionnelles (4) en pouvant en outre être chargée et est utilisable comme couche.

2. Lit pour camping-car selon la revendication 1, **caractérisé en ce que**, dans cette position et tout en conservant son utilité, il peut glisser vers l'avant le long des guides longitudinaux (5) et y être verrouillé.

3. Lit pour camping-car selon la revendication 2, **caractérisé en ce que** le volume arrière préalablement bloqué est produit comme espace de rangement supplémentaire (13).

4. Lit pour camping-car selon la revendication 1, **caractérisé en ce que** les couches partielles arrière et avant (2; 3) peuvent pivoter en positions verticales au moyen des ferrures fonctionnelles (4) et **en ce que** les couches partielles (2; 3) peuvent dans cette position glisser vers l'arrière ou vers l'avant le long des guides longitudinaux (5) et y être verrouillées.

5. Lit pour camping-car selon l'une quelconque des revendications précédentes, **caractérisé en ce qu'**une ferrure fonctionnelle (5) pour un côté d'une couche partielle (2; 3) se compose de deux leviers bi-articulés (6), qui sont respectivement disposés avec une articulation (9) sur un composant de ferrure (7) solidaire du guide longitudinal et sur un composant de ferrure (8) solidaire de la couche partielle et qui présentent lors d'un pivotement une cinématique, qui exclut une déformation mutuelle de matelas (12) disposés à proximité immédiate sur les couches partielles (2; 3).

6. Lit pour camping-car selon l'une quelconque des revendications précédentes, **caractérisé en ce qu'**un accumulateur de force est articulé sur la ferrure fonctionnelle (4), et compense au moins en partie les forces pondérales des composants impliqués.
